# EUROPEAN PATENT SPECIFICATION

(11) **EP 2 547 060 B1**
(45) Date of publication and mention of the grant of the patent: **25.06.2014**
(21) Application number: 11173426.5
(22) Date of filing: 11.07.2011
(51) Int. Cl.: H04L 29/06, H04W 4/00, H04W 12/08, H04W 88/04, H04M 3/56, H04M 3/38

(54) **Communication system utilizing near field communication (NFC) to provide enhanced teleconference features and related method**
Kommunikationssystem unter Verwendung von Nahfeldkommunikation zur Bereitstellung verbesserter Telekonferenzmerkmale und zugehöriges Verfahren
Système de communication utilisant la communication en champ proche pour offrir des caractéristiques de téléconférence améliorées et procédé associé

(43) Date of publication of application: 16.01.2013
(73) Proprietor: BlackBerry Limited, Waterloo, ON N2K 0A7 (CA)
(72) Inventor: Rose, Scott Douglas, Waterloo, Ontario N2L 3W8 (CA); Griffin, Jason Tyler, Waterloo, Ontario N2L 3W8 (CA); Lazaridis, Mihal, Waterloo, Ontario N2L 3W8 (CA)
(74) Representative: Hibbert, Juliet Jane Grace

(56) References cited:
- WO-A1-2006/085269
- GB-A- 2 452 020
- US-A1- 2009 262 914
- US-A1- 2010 220 845
- ANONYMOUS: "Near Field Communication White Paper", INTERNET CITATION, 12 February 2004 (2004-02-12), XP002370657, Retrieved from the Internet: URL:http://www.ecma-international.org/acti vities/Communications/2004tg19- 001.pdf [retrieved on 2006-03-06]

## Description

### Technical Field

This application relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.
US 2010/0220845 discloses systems and methods that facilitate a conference call between a plurality of communication devices. The method includes providing a first primary communication device, providing a second primary communication device, providing a conference call controller, establishing a first control link between the first primary communication device and the conference call controller, and communicating first identification data between the first primary communication device and the conference call controller via the first control link. The method further includes establishing a media link between the first and second primary communication devices via the conference call controller.
WO 2006/085269 discloses a communication comprising a first handheld apparatus comprising a first near field communication device and a first radio frequency transmitting/receiving device. The fist handheld apparatus is connected to a network service through a first connection to a communication network. A second handheld apparatus comprises a second near field communication device and a second radio frequency transmitting/receiving device. The first and second near field communication devices are adapted to exchange identification information when they are held next to each other so as to initiate a second connection between the second handheld apparatus and the communication network so that the second handheld apparatus and the communication network so that the second handheld apparatus is able to join the network service.
GB 2452020 discloses a method for establishing a communications session between a first communications device and a remote party including initiating the communications session establishment in the first mobile radio communications device by way of near field communication with a second mobile radio communications device already in communication with the remote party.
US 2009/026914 discloses a data processing apparatus configured for receiving a call comprising multiple callers who are identified in a multi-party caller identification value that is received with the call. The apparatus is also configured for retrieving from a database, based on the multi-party caller identification value, information about each of the multiple callers, and based on the retrieved information and a collective importance algorithm, determining or selecting one or more call treatment attributes for the call. The apparatus is further configured for processing the call using the one or more call treatment attributes that are determined or selected.
"Near Field Communication" (ECMA/TC32-TG19/2004/1) is a white paper which generally discusses an NFC protocol and some certain cases of NFC devices.

The invention is represented by the independent claims. Further aspects are defined in the dependent claims.

### Brief Description of the Drawings

FIG. 1 is a schematic block diagram of a communication system in accordance with one example embodiment.
FIG. 2 is a front view of an example embodiment of a mobile wireless communications device displaying participant information for a teleconference implemented with the system of FIG. 1
FIG. 3 is a front view of the mobile wireless communications device of FIG. 2 displaying a calendar entry with participant data for the teleconference.
FIG. 4 is a flowchart illustrating method aspects associated with the system of FIG. 1.
FIG. 5 is a front view of the mobile wireless communications device of FIG. 2 displaying a calendar entry for selection to initiate connection to a teleconference.
FIG. 6 is a schematic block diagram illustrating example components of a mobile wireless communications device that may be used with the devices of FIGS. 1-3 or 5.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a communication system is disclosed herein which may include a plurality of conferencing endpoints at different locations and capable of being coupled to a telecommunication network, a respective near field communication (NFC) device associated with each conferencing endpoint, and a plurality of electronic devices. Each electronic device may be configured to register at one of the conferencing endpoints for a teleconference between the plurality of conferencing endpoints based upon communication with a respective NFC device associated with the one of the conferencing endpoints. At least one of the electronic devices may be further configured to provide a notification based upon a security level associated with another electronic device being registered for the teleconference. Accordingly, the system may thereby provide enhanced security for teleconferences, for example.

More particularly, the system may further comprise a teleconference server configured to receive registration information for the electronic devices and determine respective security levels from the received registration information. The teleconference server may be further configured to identify each conference participant based upon the registration information for the plurality of electronic devices. Moreover, the at least one electronic device may be further configured to update a stored calendar event associated with the teleconference based upon the identified conference participants. Also, at least one of the conferencing endpoints may be configured to communicate registration information to the teleconference server. Furthermore, the at least one electronic device may be configured to communicate registration information to the teleconference server.

The security level may be determined based upon a telephone number associated with the other electronic device, an electronic mail address associated with the other electronic device, etc. At least one of the conferencing endpoints may be configured to announce electronic device registration for the teleconference. Furthermore, the at least one electronic device may comprise a mobile wireless communications device. The at least one electronic device may further comprise a display configured to display a visual alert based upon the security level associated with the other electronic device. Also, the system may further comprise a display coupled with at least one of the conferencing endpoints and configured to display a video feed received by the at least one conferencing endpoint during the teleconference.

A related electronic device is also provided and may be for use with a conferencing endpoint capable of being coupled to a telecommunication network and having a first NFC device associated therewith. The electronic device may include a second NFC device, and a controller coupled with the second NFC device. The controller may be configured to register at the conferencing endpoint for a teleconference based upon communication between the second NFC device and the first NFC device, and provide a notification based upon a security level associated with another electronic device being registered for the teleconference.

A related communication method may comprise registering a plurality of electronic devices at respective conferencing endpoints for a teleconference between the plurality of conferencing endpoints based upon communication between each electronic device and a respective NFC device associated with each of the conferencing endpoints. The method may also comprise providing a notification at at least one of the electronic devices based upon a security access level associated with another electronic device being registered for the teleconference.

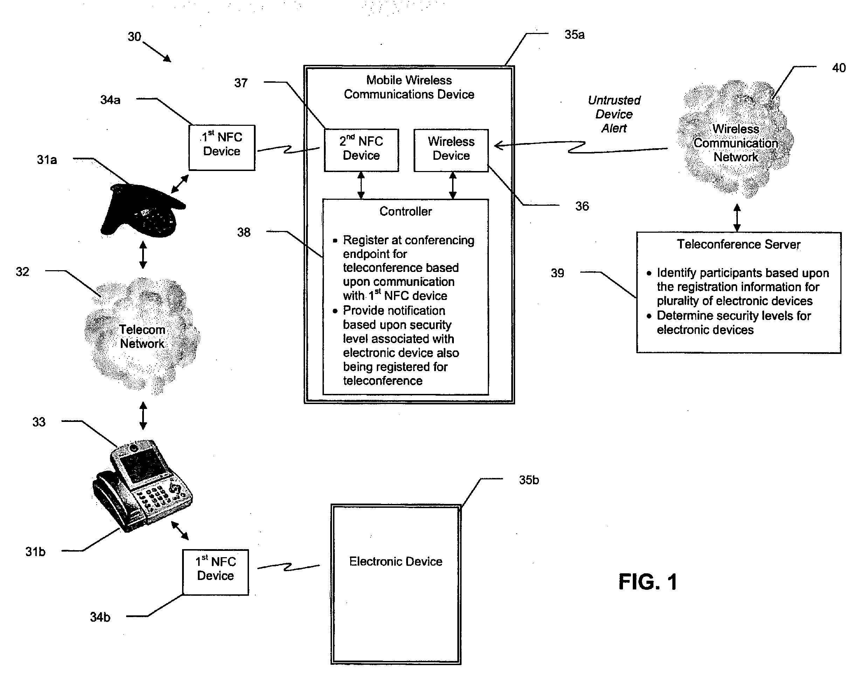

Referring initially to FIGS. 1 through 4, an example communication system **30** and related method aspects are first described. The system **30** may advantageously provide enhanced security features for teleconferences. Generally speaking, a "teleconference" comprises an exchange of information (typically including live communications) among several persons or devices remote from one another but linked by a telecommunications system or network. A teleconference may comprise or otherwise be referred to as an audio conference, telephone conference, phone conference, video conference, teleseminar, etc. The data or information exchanged during a teleconference may include one or more of audio, video, or data services via telephone, computer, telegraph, teletype, radio, television, etc. The data services may include sharing of documents, presentations, etc.

Corporate or industrial espionage is a serious concern for many companies and other organizations (e.g., government, etc.). With respect to teleconferences, unauthorized parties may attempt to call into a teleconference (e.g., via a call bridge, etc.) and eavesdrop on confidential communications. This may lead to a leak of highly sensitive information. Another potential security problem is being on a teleconference wherein external visitors (e.g., individuals not directly employed by the company or organization) are invited to participate, meaning there may be trusted as well as potentially untrusted participants on the teleconference. However, not all of the participants may be aware that such external or untrusted participants are on the call, and may therefore reveal sensitive information that the untrusted participant should not be privy to. Beyond security concerns, user convenience may also be a factor with teleconferences, as dialing into teleconference bridges usually requires the use of long and possibly unfamiliar phone numbers, extensions, passcodes, etc. It is time consuming to look up the phone numbers, extensions, and passcodes and to manually enter the numbers. Manual entry of phone numbers, extensions, and passcodes is subject to human error, and errors in the manual entry can add further delay and inconvenience.

The system **30** advantageously incorporates near field communication (NFC) features to help address the above-noted problems associated with teleconferences. By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The system **30** illustratively includes a plurality of conferencing endpoints or teleconference terminals **31a, 31b** at different locations (e.g., different geographic locations, different buildings, different portions of a large conference table in a meeting room, etc.) and coupled to a telecommunication network **32.** In the illustrated example, the endpoint **31a** comprises an audio conferencing endpoint (e.g., a speaker phone), and the endpoint **31b** comprises a video conferencing endpoint (e.g., a video phone, which may also have speaker phone capabilities) with a video display **33** coupled thereto. The video display **33** may advantageously be configured to display a video feed received by the conferencing endpoint **31b** during the teleconference, in some example embodiments. However, telephones without speaker phone or video capabilities, as well as mobile phones, may also be used as conferencing endpoints in some embodiments, for example.

Moreover, it should be noted that in some embodiments other devices may be used as conferencing endpoints, such as computers. For example, many computers (e.g., desktop computers, laptops, tablets, etc.) include microphones and speakers to provide audio communication capabilities, as well as Web cams to provide video communication capabilities over a telecommunication network. Example telecommunication networks may include wired telephone networks (e.g., plain old telephone service (POTS)), wireless networks (e.g., cellular), IP networks such as the Internet or other packet-switched networks (e.g., Voice over Internet Protocol (VoIP)), etc. It should also be noted that while only two conferencing endpoints **31a, 31b** are shown in the illustrated example of FIG. 1, other numbers of conferencing endpoints may be used in different embodiments.

The system **30** further illustratively includes a respective first NFC device **34a, 34b** associated with each conferencing endpoint **31a, 31b.** In some embodiments, the NFC device **34a** or **34b** (e.g., an NFC transceiver) may be included within a same housing with the components of the respective conferencing endpoint **31a** or **31b,** and may be coupled to a control circuitry (e.g., processor, memory, network interface, etc.) for the respective conferencing endpoint. In another configuration, the NFC device **34a** or **34b** may be a stand-alone device positioned on or adjacent the respective conferencing endpoint **31a** or **31b,** for example. That is, a given first NFC device **34a** or **34b** may communicate with its respective conferencing endpoints **31a** or **31b** in some embodiments, but this need not be the case in all embodiments, as will be discussed further below. In some example embodiments, a given first NFC device **34a** or **34b** may be positioned outside a conference room in which the respective conferencing endpoints **31a** or **31b** is located, and may thereby serve as a security access point for entry into the conference room, if desired.

The system **30** also illustratively includes a plurality of electronic devices **35a, 35b.** In the present example, the electronic device **35a** comprises a mobile wireless communication device, which will also be referred to as a "mobile device" herein. Example mobile devices may include portable or personal media players (e.g., music or MP3 players, video players, etc.), portable gaming devices, portable or mobile telephones, smartphones, tablet computers, electronic readers ("e-readers"), etc., although other suitable types of mobile devices may also be used in various embodiments. In addition to mobile devices, other types of electronic devices that may be used with the system **30** generally include devices which are configured for NFC communication. For example, this may include NFC-enabled key cards or security badges, as well as other NFC tokens or devices.

The mobile device **35a** illustratively includes a wireless device **36,** which may comprise a wireless receiver, transmitter, or both, which may be combined as a transceiver. The mobile device **35a** illustratively further includes a second NFC device **37,** and a controller **38** coupled to the wireless device **36** and the second NFC device **37.** The controller **38** may be implemented using a combination of hardware (e.g., processor, memory, etc.) and software (e.g., a computer-readable medium having computer-executable instructions), for example, to perform the various operations or functions described herein.

Beginning at Block **50,** each of the devices **35a, 35b** is configured to register at a respective conferencing endpoint **31a, 31b** for a teleconference between the plurality of conferencing endpoints, at Block **51.** In particular, the registration occurs based upon communication with a respective first NFC device **34a, 34b** associated with the given conferencing endpoint **31a, 31b.** By way of example, the registration information may be communicated to a teleconference server **39.** The teleconference server **39** may be used to provide a call bridge for the teleconference, and provide call management services such as connecting parties into the teleconference upon dialing in. By way of example, the registration information may comprise an access code for the teleconference, a personal identification number (PIN), a meeting invitation (e.g., an email invitation) for the teleconference, etc. In some example embodiments, security may be put in place to limit or restrict access to the teleconference (e.g., preventing logging in or connecting to the teleconference) if proper registration information is not provided.

The registration information may be communicated to the teleconference server **39** in different ways. One approach is that the conferencing endpoints **31a** or **31b** may communicate this information to the teleconference server **39,** either by the telecommunication network **32,** or a separate network connection (e.g., local area network (LAN), etc.), at Block **52.** In some embodiments, the first NFC devices **34a, 34b** may be connected to the telecommunication network **32** or other network, and thereby communicate the registration information to the teleconference server **39.** In still another example embodiment, the mobile device **35a** may communicate its respective registration information to the teleconference server **39** via the wireless device **36** and a wireless communications network **40** (e.g., cellular, Bluetooth, WiFi, WiMAX, etc.) for example. This may be particularly appropriate where the first NFC device **34a** is a stand-alone device not otherwise in signal communication with its respective conferencing endpoint **31a,** and also not connected to a communications network. However, various approaches for communicating registration information may be used for different electronic devices **35a, 35b** within the system **30.**

In the example shown in FIG. 1, the mobile device **35a** has a respective security level associated therewith making it a trusted device, while the electronic device **35b** has a respective security level associated therewith making it an untrusted device. So, as noted above, this may mean that the mobile device **35a** is associated with a corporate employee or member of a given enterprise, corporation or organization, while the electronic device **35b** is associated with someone from outside the enterprise, corporation or organization. In other embodiments, an untrusted participant may be from a same corporation or organization, yet not have a same level of security clearance as other participants from the corporation, for example. By way of example, this determination may be made based upon whether a name, telephone number, email address, etc. of a participant is listed in a corporate enterprise directory. Another approach is to determine whether a phone number or email address associated with a teleconference participant matches with a corresponding corporate phone number prefix or domain name, for example. Other suitable approaches for determining whether an electronic device **35a, 35b** has a trustworthy security level associated therewith may also be used.

Accordingly, when a determination is made that one or more untrusted electronic devices are registered for the teleconference, at Block **53,** the controller **38** may advantageously be configured to provide a notification to this effect. In some example embodiments, the teleconference server **39** may determine registration of an untrusted electronic device(s), and send an alert to the trusted electronic device(s) registered for the teleconference, at Block **54.** For example, the alert may be forwarded to the mobile device **35a** via the wireless communications network **40.** However, it should be noted that in some example embodiments the mobile device **35a** may make its own determination as to whether other electronic devices on the teleconference are trusted or not (e.g., through comparison to a contacts list, etc.) .

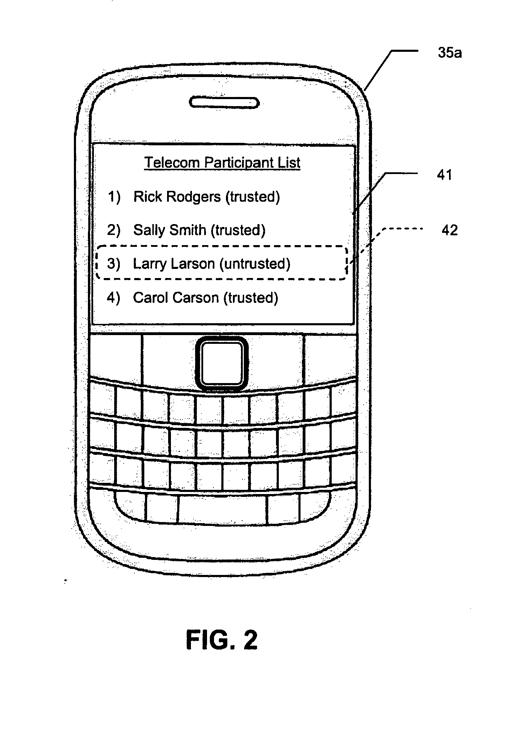

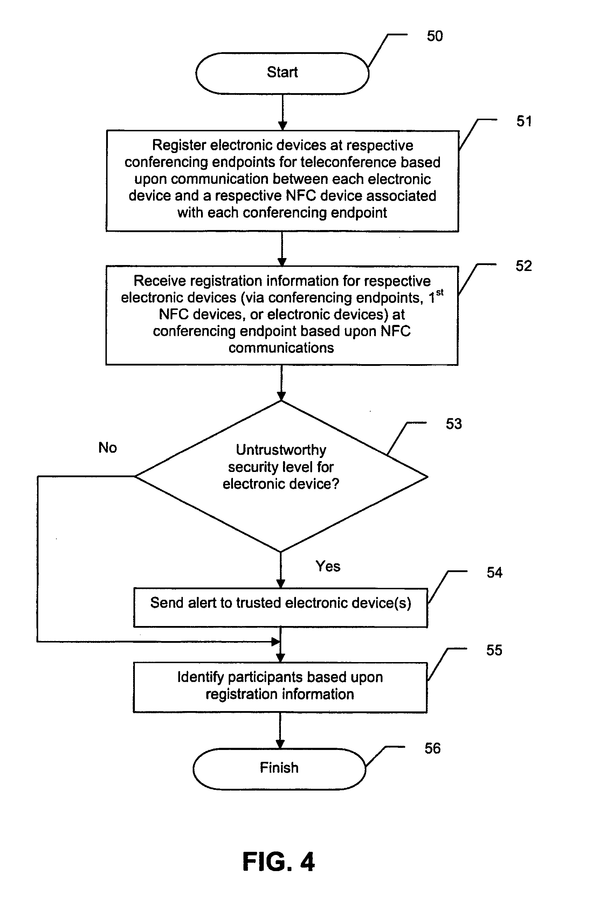

In the example of FIG. 2, the mobile device **35a** further illustratively includes a display **41.** A participant list including the participants or attendees of the teleconference may advantageously be generated, at Block **55,** and displayed on the display **41,** which illustratively concludes the method of FIG. 4 (Block **56).** The participant list may be generated by the teleconference server **39** and forwarded to the mobile device **35a,** such as through an email or SMS message, calendar reconciliation (e.g., through a Microsoft® Exchange server), etc. In some embodiments, the controller **38** may generate the list based upon participant information it receives via the teleconference server **39,** or through conferencing endpoint **31a** via the first NFC device **34a.**

In the present example, the participant list includes four participants, namely Rick Rodgers, Sally Smith, Larry Larson, and Carol Carson. A meeting invitation may have been sent to the participants via e-mail, e.g., to Rick Rodgers (rrodgers@internalcompany.com), Sally Smith (ssmith@internalcompany.com), Larry Larson (llarson@externalcompany.com), and Carol Carson (ccarson@internalcompany.com). Of these, all but Larry Larson have been determined to be trusted participants on the teleconference. Not only is the status of the participant listed after his or her respective name, but a visual alert indicator **42** (here a dashed box) is also provided to help highlight the fact that an untrusted participant (i.e., Larry Larson) is on the teleconference, and therefore warn the remaining trusted participants that they may need to refrain from speaking about sensitive or secure matters during the teleconference. Other visual alerts may also be used, such as highlighting or change of colors, bold text, flashing text, icons or symbols, etc.

It should be noted that the participant list may be updated during the teleconference as participants join or leave. In addition, the participant list may indicate the time that each participant joined the teleconference and the time that each participant left the teleconference. The participant list may also indicate a length of time that each participant was in attendance on the teleconference. Moreover, the participant list may be different for different electronic devices. For example, the teleconference server **39** may provide a list to the untrusted electronic device **35b** that does not identify who is trusted or untrusted. Other information may also be included with the participant list, such as pictures associated with the participants, location, company or organization affiliations, position or job title, etc. Additionally, in some example embodiments the conferencing endpoints **31a, 31b** may display participant information. Moreover, in some example embodiments the conferencing endpoints **31a, 31b** may announce registration of electronic devices (e.g., by providing the names of participants associated with the respective electronic device via audio over a speaker or visually on a display or both) for the teleconference. The name of each participant may be provided as each participant joins the teleconference and as each participant leaves the teleconference.

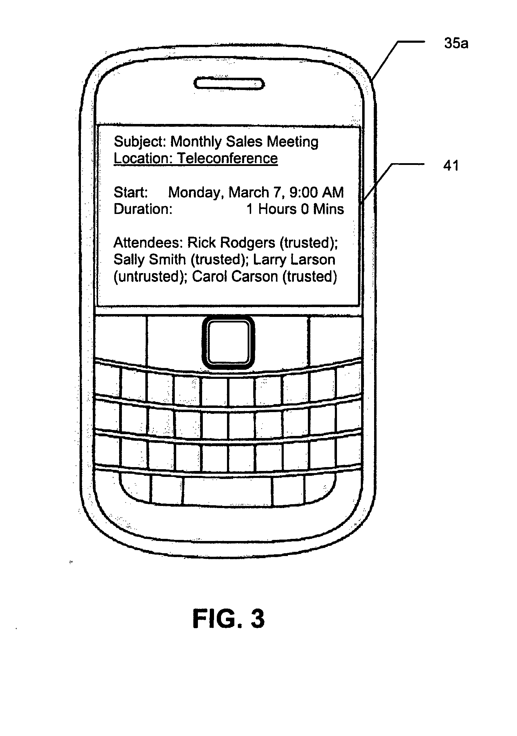

In some example embodiments, the controller **38** may be further configured to incorporate the participant list into a stored calendar event associated with the teleconference, as shown in FIG. 3. In this example, the calendar event for the teleconference with the participants noted above (the "attendees") is shown on the display **41,** along with the subject of the meeting ("monthly sales meeting"), the location ("teleconference"), start time ("Monday, March 7, 9:00 AM"), and the duration ("1 Hours, 0 Mins"). Here again, the calendar event may be synchronized via a Microsoft® Exchange server, etc., and other information regarding the meeting (e.g., end time, comments, etc.) may optionally be stored with the calendar event displayed on the display **41.**

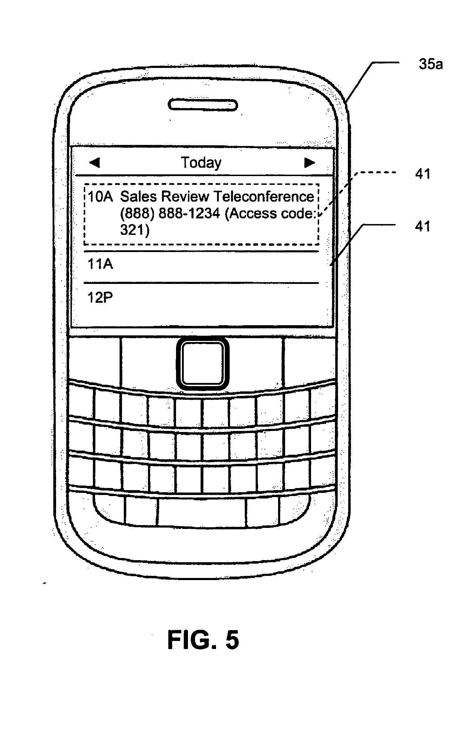

The foregoing will be further understood with reference to an example use case. For a given teleconference, instead of dialing phone numbers at conferencing endpoints **31a, 31b,** participants swipe or bump their respective electronic devices **35a, 35b** (e.g., with a meeting invitation or calendar entry open on the display **41**) with the first NFC devices **34a, 34b.** Referring additionally to the example of FIG. 5, the conferencing endpoint **31a** may automatically dial a number provided by the mobile device **35a** from the selected (as indicated by a dashed box **60**) calendar entry or meeting invitation for the "sales review teleconference" scheduled from 10 AM to 11 AM. That is, the conferencing endpoint **31a** may obtain the dial-in number, access code, etc., through NFC communication with the mobile device **35a,** and use this information to connect to the teleconference accordingly. In some embodiments, however, such information may be obtained from the teleconference server **39** or other database, responsive to NFC communication with the mobile device **35a** (e.g., the mobile device provides a meeting ID, which the conferencing endpoint **31a** uses to look up the appropriate teleconference access information).

In some example embodiments, a participant may use certain types of electronic devices (e.g., mobile devices) to log in or sign in to the teleconference (such as through providing a password or PIN) to verify that they are trusted. Moreover, participants may be prevented from logging in to the teleconference without proper credentials, or if they do not have a proper invitation, to advantageously provide enhanced security, as noted above. If all of the participants on the list of invitees are known to be trusted, this also helps ensure that other untrusted participants will not be participating in the teleconference, i.e., by keeping untrusted participants from dialing into the teleconference in the first place.

Upon registration for the teleconference via NFC, the participant's name, company, etc., may be automatically broadcasted or announced to indicate that the participant has joined the call. In some example embodiments, accommodation for participants who may be traveling (e.g., they may be in a hotel, airport, car, etc.) or are working from home and do not have access to an NFC conference endpoint or NFC tagged teleconference terminal may be provided. For example, to allow such participants on the teleconference, other security credentials may be used (e.g., security badge number, employee number, password, etc.).

The system **30** may therefore provide several technical advantages. For example, dialing into a conference bridge, etc., may be automated for participant convenience, so that the participant does not have to look up and type in phone numbers, access codes, etc. Not only may this be quicker and more convenient for users, it may also be more accurate. Moreover, the system **30** may also advantageously allow participants to know how many people are on the line, as well as who those people are, at a given time. Furthermore, participants who enter the teleconference or drop off may be tracked. As noted above, if an external (i.e., untrusted) participant logs into the meeting (e.g., a person outside of the corporation or organization), an indicator, prompt or warning may advantageously be provided to serve as a warning or notification for other participants that someone outside the organization is present on the teleconference. The system **30** may also advantageously help prevent unauthorized access to the teleconference, as noted above.

It should also be noted that the system **30** is applicable to in-person meetings and a combination of in-person meetings and teleconferences. That is, meeting participants in a same room may be asked or required to sign in to the meeting using respective mobile devices **35, 35b.** In instances where multiple participants are in a same meeting room during a teleconference and all sign in with their respective mobile devices **35a, 35b** via a given NFC device **34a, 34b,** various approaches may be used for connecting to the conference call. For example, checking in by the first participant (i.e., through swiping of his mobile device **35a** or **35b** with an NFC device **34a** or **34b** in the conference room) may cause a respective conferencing endpoint **31a** or **31b** to initiate or connect to the teleconference, as described above. In another example approach, the teleconference may be initiated upon checking in a participant designated as a host or leader for the teleconference. Another example approach is that the teleconference may be initiated based upon all participants registered for the given location having checked in. Yet another example is that the teleconference will be initiated at the scheduled starting time so long as one (or more) participants have already checked in.

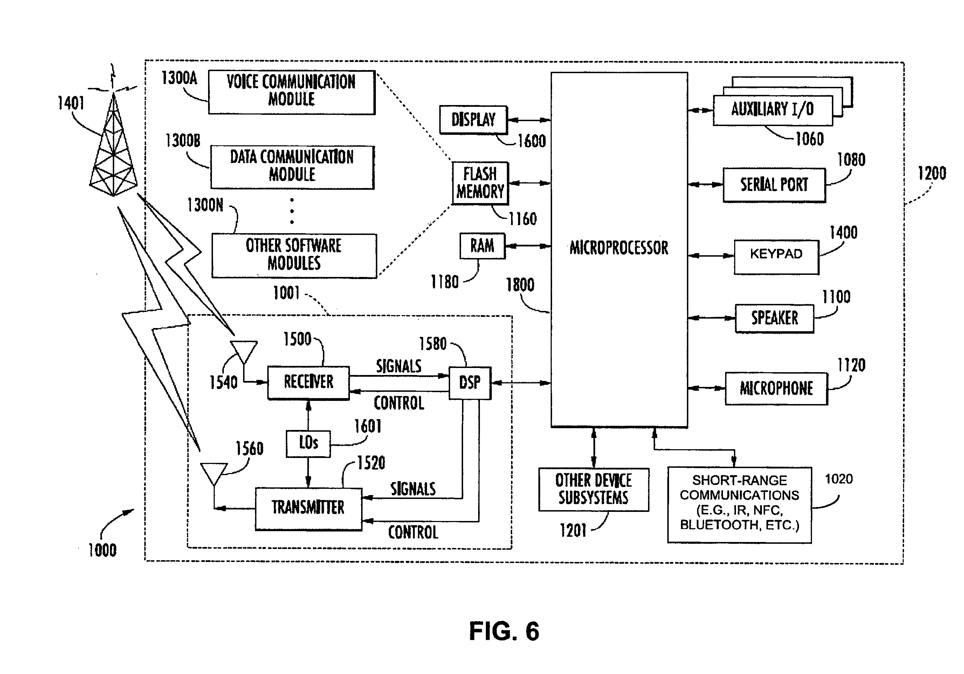

Example components of a mobile wireless communications device **1000** that may be used in accordance with the above-described embodiments are further described below with reference to FIG. 6. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC7™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

## Claims

1. A communication system (30) comprising:
a plurality of conferencing endpoints (31a, 31b) at different locations and capable of being coupled to a telecommunication network (32);
a respective near field communication, NFC, device (34a, 34b) associated with each conferencing endpoint;
a plurality of electronic devices (35a, 35b) each configured to register at one of the conferencing endpoints for a teleconference between the plurality of conferencing endpoints based upon communication with a respective NFC device associated with said one of the conferencing endpoints; and
a teleconference server (39) configured to receive registration information for said electronic devices and determine respective security levels from the received registration information;
at least one of said electronic devices being further configured to provide a notification if an untrusted electronic device is registered for the teleconference based upon the determined security level associated with the untrusted electronic device being registered for the teleconference.

2. The communication system (30) of Claim 1 wherein said teleconference server (39) is further configured to identify each conference participant based upon the registration information for said plurality of electronic devices (35a, 35b).

3. The communication system (30) of Claim 1 or 2 wherein at least one of said conferencing endpoints (31a, 31b) is configured to communicate registration information to said teleconference server (39).

4. The communication system (30) of Claim 1, 2, or 3 wherein said at least one electronic device (35a, 35b) is configured to communicate registration information to said teleconference server (39).

5. The communication system (30) of any preceding claim wherein the security level is based upon a telephone number associated with the other electronic device (35a, 35b).

6. The communication system (30) of any preceding claim wherein the security level is based upon an electronic mail address associated with the other electronic device (35a, 35b).

7. The communication system (30) of any preceding claim wherein at least one of said conferencing endpoints (31a, 31b) is configured to announce electronic device registration for the teleconference.

8. An electronic device (35a, 35b) for use with a conferencing endpoint (31a, 31b) capable of being coupled to a telecommunication network (32), the conferencing endpoint having a first near field communication, NFC, device (34a, 34b) associated therewith, the electronic device comprising:
a second NFC device (37); and
a controller (38) coupled with said second NFC device, the controller being configured to
register at the conferencing endpoint for a teleconference based upon communication between said second NFC device and the first NFC device,
wherein a teleconference server (39) is configured to receive registration information for electronic devices registering for the teleconference and determine respective security levels from the received registration information, and
provide a notification if an untrusted electronic device is registered for the teleconference based upon the determined security level associated with the untrusted electronic device being registered for the teleconference.

9. The electronic device (35a, 35b) of Claim 8
wherein said controller (38) is further configured to update a stored calendar event associated with the teleconference based upon identified conference participants.

10. The electronic device of Claim 8 or 9 further comprising a wireless device (36) coupled with said controller (38); and wherein said controller is further configured to communicate registration information via said wireless device.

11. A communication method comprising:
registering a plurality of electronic devices (35a, 35b) at respective conferencing endpoints (31a, 31b) for a teleconference between the plurality of conferencing endpoints based upon communication between each electronic device and a respective near field communication, NFC, device (34a, 34b) associated with each of said conferencing endpoints;
at a teleconference server (39), receiving registration information for the electronic devices and determining respective security levels from the received registration information; and
providing a notification at a given electronic device if an untrusted electronic device is registered for the teleconference based upon the determined security level associated with the untrusted electronic device being registered for the teleconference.

12. The method of Claim 11 further comprising updating a stored calendar event associated with the teleconference at the at least one electronic device (35a, 35b) based upon identified conference participants.

13. The method of Claim 11 or 12 further comprising communicating registration information from at least one of the conferencing endpoints (31a, 31b) to the teleconference server (39).

## Patentansprüche

1. Kommunikationssystem (30) mit:
einer Vielzahl von Konferenzendpunkten (31a, 31b) an verschiedenen Orten, die dazu fähig sind, an ein Telekommunikationsnetz (32) gekoppelt zu werden,
einer entsprechenden Nahfeldkommunikations-, NFC-, Vorrichtung (34a, 34b), die mit jedem Konferenzendpunkt verknüpft ist,
einer Vielzahl von Elektronikvorrichtungen (35a, 35b), wobei jede dazu konfiguriert ist, sich an einer der Konferenzendpunkte für eine Telekonferenz zwischen der Vielzahl von Konferenzendpunkten aufgrund einer Kommunikation mit einer entsprechenden NFC-Vorrichtung anzumelden, die mit dem einen der Konferenzendpunkte verknüpft ist, und
einem Telekonferenzserver (39), der dazu konfiguriert ist, Anmeldungsinformation für die Elektronikvorrichtungen zu erhalten und entsprechende Sicherheitsstufen von der erhaltenen Anmeldungsinformation zu bestimmen,
wobei mindestens eine der Elektronikvorrichtungen ferner dazu konfiguriert ist, wenn eine Elektronikvorrichtung, der nicht vertraut wird, für die Telekonferenz angemeldet wird bzw. ist, aufgrund der bestimmten Sicherheitsstufe, die mit der Elektronikvorrichtung verknüpft ist, der nicht vertraut wird und die für die Telekonferenz angemeldet wird bzw. ist, eine Mitteilung bereitzustellen.

2. Kommunikationssystem (30) nach Anspruch 1, wobei der Telekonferenzserver (39) ferner dazu konfiguriert ist, jeden Konferenzteilnehmer aufgrund der Anmeldungsinformation für die Vielzahl von Elektronikvorrichtungen (35a, 35b) zu identifizieren.

3. Kommunikationssystem (30) nach Anspruch 1 oder 2, wobei mindestens einer der Konferenzendpunkte (31a, 31b) dazu konfiguriert ist, die Anmeldungsinformation an den Telekonferenzserver (39) zu kommunizieren.

4. Kommunikationssystem (30) nach Anspruch 1, 2 oder 3, wobei die mindestens eine Elektronikvorrichtung (35a, 35b) dazu konfiguriert ist, die Anmeldungsinformation an den Telekonferenzserver (39) zu kommunizieren.

5. Kommunikationssystem (30) nach einem der vorhergehenden Ansprüche, wobei die Sicherheitsstufe auf einer Telefonnummer basiert, die mit der anderen Elektronikvorrichtung (35a, 35b) verknüpft ist.

6. Kommunikationssystem (30) nach einem der vorhergehenden Ansprüche, wobei die Sicherheitsstufe auf einer E-Mail-Adresse basiert, die mit der anderen Elektronikvorrichtung (35a, 35b) verknüpft ist.

7. Kommunikationssystem (30) nach einem der vorhergehen Ansprüche, wobei mindestens einer der Konferenzendpunkte (31a, 31b) dazu konfiguriert ist, eine Elektronikvorrichtungsanmeldung für die Telekonferenz kundzugeben.

8. Elektronikvorrichtung (35a, 35b) zur Verwendung mit einem Konferenzendpunkt (31a, 31b), der dazu fähig ist, an ein Telekommunikationsnetz (32) gekoppelt zu werden, wobei der Konferenzendpunkt eine erste Nahfeldkommunikations-, NFC-, Vorrichtung (34a, 34b) aufweist, die damit verknüpft ist, wobei die Elektronikvorrichtung Folgendes aufweist:
eine zweite NFC-Vorrichtung (37) und
eine Steuereinheit (38), die mit der zweiten NFC-Vorrichtung gekoppelt ist, wobei die Steuereinheit dazu konfiguriert ist,
an dem Konferenzendpunkt für eine Telekonferenz aufgrund einer Kommunikation zwischen der zweiten NFC-Vorrichtung und der ersten NFC-Vorrichtung anzumelden,
wobei ein Telekonferenzserver (39) dazu konfiguriert ist, Anmeldungsinformation für Elektronikvorrichtungen zu erhalten, die sich für die Telekonferenz anmelden, und entsprechende Sicherheitsstufen von der erhaltenen Anmeldungsinformation zu bestimmen und
wenn eine Elektronikvorrichtung, der nicht vertraut wird, für die Telekonferenz angemeldet wird bzw. ist, eine Mitteilung aufgrund der bestimmten Sicherheitsstufe bereitzustellen, die mit der Elektronikvorrichtung verknüpft ist, der nicht vertraut wird und die für die Telekonferenz angemeldet wird bzw. ist.

9. Elektronikvorrichtung (35a, 35b) nach Anspruch 8, wobei die Steuereinheit (38) ferner dazu konfiguriert ist, ein gespeichertes Kalenderereignis, das mit der Telekonferenz verknüpft ist, aufgrund identifizierter Konferenzteilnehmer zu aktualisieren.

10. Elektronikvorrichtung nach Anspruch 8 oder 9 ferner mit einer Drahtlosvorrichtung (36), die mit der Steuereinheit (38) gekoppelt ist, wobei die Steuereinheit ferner dazu konfiguriert ist, die Anmeldungsinformation über die Drahtlosvorrichtung zu kommunizieren.

11. Kommunikationsverfahren mit:
Anmelden einer Vielzahl von Elektronikvorrichtungen (35a, 35b) an entsprechenden Konferenzendpunkten (31a, 31b) für eine Telekonferenz zwischen der Vielzahl von Konferenzendpunkten aufgrund einer Kommunikation zwischen jeder Elektronikvorrichtung und einer entsprechenden Nahfeldkommunikations-, NFC-, Vorrichtung (34a, 34b), die mit jedem der Konferenzendpunkte verknüpft ist,
Erhalten von Anmeldungsinformation für die Elektronikvorrichtungen an einem Telekonferenzserver (39) und Bestimmen entsprechender Sicherheitsstufen von der erhaltenen Anmeldungsinformation und
Bereitstellen einer Mitteilung an einer gegebenen Elektronikvorrichtung, wenn eine Elektronikvorrichtung, der nicht vertraut wird, für die Telekonferenz angemeldet wird bzw. ist, aufgrund der bestimmten Sicherheitsstufe, die mit der Elektronikvorrichtung verknüpft ist, die für die Telekonferenz angemeldet wird bzw. ist.

12. Verfahren nach Anspruch 11, ferner mit Aktualisieren eines gespeicherten Kalenderereignisses, das mit der Telekonferenz verknüpft ist, an der mindestens einen Elektronikvorrichtung (35a, 35b) aufgrund identifizierter Konferenzteilnehmer.

13. Verfahren nach Anspruch 11 oder 12, ferner mit Kommunizieren der Anmeldungsinformation von mindestens einem der Konferenzendpunkte (31a, 31b) an den Telekonferenzserver (39).

## Revendications

1. Système de communication (30) comprenant :
une pluralité de points d'extrémité de téléconférence (31a, 31b) situés à des endroits différents et capables d'être couplés à un réseau de télécommunication (32) ;
un dispositif de communication en champ proche, NFC pour « *Near Field Communication* », (34a, 34b) respectif associé à chacun des points d'extrémité de téléconférence ;
une pluralité de dispositifs électroniques (35a, 35b), chacun étant configuré pour s'enregistrer sur l'un des points d'extrémité de téléconférence pour réaliser une téléconférence avec la pluralité de points d'extrémité de téléconférence sur la base d'une communication avec un dispositif NFC respectif associé audit un des points d'extrémité de téléconférence ; et
un serveur de téléconférence (39) configuré pour recevoir des informations d'enregistrement pour lesdits dispositifs électroniques et pour déterminer des niveaux de sécurité respectifs à partir des informations d'enregistrement reçues ;
au moins un desdits dispositifs électroniques étant en outre configuré pour fournir une notification si un dispositif électronique non fiable est enregistré pour la téléconférence, en fonction du niveau de sécurité déterminé qui est associé au dispositif électronique non fiable qui s'est enregistré pour la téléconférence.

2. Système de communication (30) selon la revendication 1, dans lequel ledit serveur de téléconférence (39) est en outre configuré pour identifier chaque participant à la téléconférence en fonction des informations d'enregistrement pour ladite pluralité de dispositifs électroniques (35a, 35b).

3. Système de communication (30) selon la revendication 1 ou 2, dans lequel au moins un des points d'extrémité de téléconférence (31a, 31b) est configuré pour communiquer des informations d'enregistrement audit serveur de téléconférence (39).

4. Système de communication (30) selon la revendication 1, 2 ou 3, dans lequel ledit au moins un dispositif électronique (35a, 35b) est configuré pour communiquer des informations d'enregistrement audit serveur de téléconférence (39).

5. Système de communication (30) selon l'une quelconque des revendications précédentes, dans lequel le niveau de sécurité est fondé sur un numéro de téléphone associé à l'autre dispositif électronique (35a, 35b).

6. Système de communication (30) selon l'une quelconque des revendications précédentes, dans lequel le niveau de sécurité est fondé sur une adresse de courrier électronique associée à l'autre dispositif électronique (35a, 35b).

7. Système de communication (30) selon l'une quelconque des revendications précédentes, dans lequel au moins un desdits points d'extrémité de téléconférence (31a, 31b) est configuré pour annoncer un enregistrement des dispositifs électroniques pour la téléconférence.

8. Dispositif électronique (35a, 35b) destiné à être utilisé avec un point d'extrémité de téléconférence (31a, 31b) capable d'être couplé à un réseau de télécommunication (32), le point d'extrémité de téléconférence étant associé à un premier dispositif de communication en champ proche, NFC pour « *Near Field Communication* », (34a, 34b), le dispositif électronique comprenant :
un second dispositif NFC (37) ; et
un contrôleur (38) couplé audit second dispositif NFC, le contrôleur étant configuré pour :
s'enregistrer auprès du point d'extrémité de téléconférence pour une téléconférence, en fonction d'une communication entre ledit second dispositif NFC et le premier dispositif NFC ;
dans lequel un serveur de téléconférence (39) est configuré pour recevoir des informations d'enregistrement pour des dispositifs électroniques s'enregistrant pour la téléconférence et déterminer des niveaux de sécurité respectifs à partir des informations d'enregistrement reçues ; et
pour fournir une notification si un dispositif électronique non fiable est enregistré pour la téléconférence, en fonction du niveau de sécurité déterminé qui est associé au dispositif électronique non fiable qui s'est enregistré pour la téléconférence.

9. Dispositif électronique (35a, 35b) selon la revendication 8, dans lequel ledit contrôleur (38) est en outre configuré pour mettre à jour un événement d'agenda enregistré qui est associé à la téléconférence, en fonction des participants à la téléconférence identifiés.

10. Dispositif électronique selon la revendication 8 ou 9, comprenant en outre un dispositif sans fil (36) couplé audit contrôleur (38) et dans lequel ledit contrôleur est en outre configuré pour communiquer des informations d'enregistrement via ledit dispositif sans fil.

11. Procédé de communication comprenant les étapes consistant à :
enregistrer une pluralité de dispositifs électroniques (35a, 35b) sur des points d'extrémité de téléconférence (31a, 31b) respectifs pour une téléconférence entre la pluralité de points d'extrémité de téléconférence en fonction d'une communication entre chaque dispositif électronique et un dispositif de communication en champ proche, NFC pour « *Near Field Communication* », (34a, 34b) respectif qui est associé à chacun des points d'extrémité de téléconférence ;
sur un serveur de téléconférence (39), recevoir des informations d'enregistrement pour les dispositifs électroniques et déterminer des niveaux de sécurité respectifs à partir des informations d'enregistrement reçues ; et
fournir une notification à un dispositif électronique donné si un dispositif électronique non fiable est enregistré pour la téléconférence, en fonction du niveau de sécurité déterminé qui est associé au dispositif électronique non fiable qui s'est enregistré pour la téléconférence.

12. Procédé selon la revendication 11, comprenant en outre l'étape consistant à mettre à jour un événement d'agenda enregistré qui est associé à la téléconférence, sur ledit au moins un dispositif électronique (35a, 35b), en fonction des participants à la téléconférence identifiés.

13. Procédé selon la revendication 11 ou 12, comprenant en outre l'étape consistant à communiquer des informations d'enregistrement au serveur de téléconférence (39) à partir d'au moins un des points d'extrémité de téléconférence (31a, 31b).
